(19) Europäisches Patentamt
European Patent Office
Office européen des brevets

(11) **EP 4 756 738 A1**

(12) **EUROPEAN PATENT APPLICATION**

(43) Date of publication:
**10.06.2026  Bulletin 2026/24**

(21) Application number: **25217279.6**

(22) Date of filing: **20.11.2025**

(51) International Patent Classification (IPC):
*G06V 10/82* (2022.01)   *G06V 20/60* (2022.01)

(52) Cooperative Patent Classification (CPC):
**G06V 10/82; G06V 20/60;** G06V 2201/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.12.2024  US 202418974526**

(71) Applicant: **Robert Bosch GmbH
70442 Stuttgart (DE)**

(72) Inventors:
• **Mummadi, Chaithanya Kumar
Coraopolis, PA, 15108 (US)**
• **Pereira, Marcus
Baltimore, MD, 21218 (US)**
• **Schmedding, Sabrina
75233 Tiefenbronn (DE)**
• **Lin, Wan-Yi
Wexford, PA, 15090 (US)**
• **Qualmann, Alexander
71101 Schoenaich (DE)**
• **Wang, Ruyu
71229 Leonberg (DE)**

(54) **DETECTION OF DEFECTS USING A TEXT-TO-IMAGE DIFFUSION MODEL**

(57)    Methods for fine-tuning a convolutional neural network of a Text-To-Image Diffusion Model within a context of recognizing defects of manufactured products within images of those products are disclosed. Images of manufactured images that have various scratches, dents, or other defects are provided to the model along with a word or phrase indicating that there is a defect. The model then learns to identify the portion of the overall image that includes the defect. The learning of this type of task is based on the use of segmentation masks that correspond to the images, which are then used along with cross-attention maps of the model in order to calculate an average defect mask loss parameter of the model. By computing this parameter and applying it when updating weights of the model, the model can be fine-tuned to detect defects of manufactured products.

FIG. 1

EP 4 756 738 A1

**Description**

TECHNICAL FIELD

The present disclosure relates to fine-tuning a text-to-image diffusion model.

BACKGROUND

Diffusion Models have been applied to various data modalities such as point clouds, audio, depth maps as well as to various tasks other than generation such as inpainting, super-resolution, segmentation, object detection, and to solve various linear and nonlinear inverse problems. Because Diffusion Models are able to capture the underlying data distribution, they serve as good data-driven high capacity priors. However, generalized applications of Diffusion Models are not configured for execution of specified tasks, due to lack of fine-tuning.

SUMMARY

In an embodiment, a method for fine-tuning a Text-To-Image Diffusion Model, such as a Text-To-Image Diffusion Model, is provided. The method includes: receiving an image-based data sample and an embedded text sample, wherein: image-based data sample is an image of a manufactured product with a defect; and the embedded text sample is an embedding of a text-based data sample that indicates the defect; executing a variational autoencoder to output a latent space representation of the image-based data sample; executing a noise model to output a noisy version of the latent space representation; providing the noisy version of the latent space representation and the embedded text sample to a convolutional neural network of the Text-To-Image Latent Diffusion Model; executing the convolutional neural network to learn to predict noise of the image-based data sample using a plurality of cross-attention maps at different spatial resolutions; computing an average defect mask loss parameter based on cross-attention maps of a given one of the different spatial resolutions and on a segmentation mask corresponding to the image-based data sample; updating one or more weights of the convolutional neural network based, at least in part, on the average defect mask loss parameter; and outputting a fine-tuned Text-To-Image Latent Diffusion Model with the updated one or more weights for use in detecting defects in other image-based data samples of other manufactured products.

In another embodiment, a system including a processor and memory containing instructions that, when executed by the processor, cause the processor to perform these steps.

In another embodiment, a non-transitory computer-readable medium includes instructions that, when executed by a processor, cause the processor to perform these steps.

BRIEF DESCRIPTION OF THE DRAWINGS

FIG. 1 illustrates a system for training, fine-tuning, and utilizing a machine learning model, such as a convolutional neural network, according to some embodiments.

FIG. 2 illustrates a computer-implemented method for training, fine-tuning, and utilizing a machine learning model, such as a convolutional neural network, according to some embodiments.

FIG. 3 illustrates the architecture of a Text-To-Image Diffusion Model that is configured to receive an image-based data sample of a manufactured product and a text-based data sample indicating that there is a defect on the manufactured product, and subsequently detect a portion of the image that corresponds to the defect, according to some embodiments.

FIG. 4 illustrates a process for fine-tuning a convolutional neural network (e.g., U-Net) within the Text-To-Image Diffusion Model introduced in FIG. 3, according to some embodiments.

FIG. 5A illustrates a first example of an image of a manufactured product with a defect and a positive recognition by a fine-tuned convolutional neural network of a Text-To-Image Diffusion Model of the portion of the image that shows the defect, according to some embodiments.

FIG. 5B illustrates the same image introduced in FIG. 5A, and a failure of some other diffusion model to recognize the portion of the image that shows the defect.

FIG. 6A illustrates a second example of an image of a manufactured product with a defect and a positive recognition by a fine-tuned convolutional neural network of a Text-To-Image Diffusion Model of the portion of the image that shows the defect, according to some embodiments.

FIG. 6B illustrates the same image introduced in FIG. 6A, and a failure of some other diffusion model to recognize the portion of the image that shows the defect.

FIG. 7A illustrates a third example of an image of a manufactured product with a defect and a positive recognition by a fine-tuned convolutional neural network of a Text-To-Image Diffusion Model of the portion of the image that shows the defect, according to some embodiments.

FIG. 7B illustrates the same image introduced in FIG. 7A, and a failure of some other diffusion model to recognize the portion of the image that shows the defect.

FIG. 8A illustrates a first example of an image of a manufactured product without a defect and a positive recognition by a fine-tuned convolutional neural network of a Text-To-Image Diffusion Model that there is no defect present within the image, according to some embodiments.

FIG. 8B illustrates a second example of an image of a manufactured product without a defect and a positive recognition by the fine-tuned convolutional neural network of the Text-To-Image Diffusion Model that there is no defect present within the image, according to some embodiments.

FIG. 8C illustrates a third example of an image of a manufactured product without a defect and a positive recognition by the fine-tuned convolutional neural network of the Text-To-Image Diffusion Model that there is no defect present within the image, according to some embodiments.

FIG. 9 is a flow diagram that illustrates a process of fine-tuning a convolutional neural network of a Text-To-Image Diffusion Model to detect a portion of an image that captures a manufactured product that corresponds to a defect within the product, according to some embodiments.

FIG. 10 depicts a schematic diagram of an interaction between a computer-controlled machine and a control system, according to some embodiments.

FIG. 11 depicts a schematic diagram of the control system of FIG. 10 configured to control a manufacturing machine of a manufacturing system, such as an automated optical inspection system of a production line, according to some embodiments.

DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative bases for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical application. Various combinations and modifications of the features consistent with the teachings of this disclosure, however, could be desired for particular applications or implementations.

"A", "an", and "the" as used herein refers to both singular and plural referents unless the context clearly dictates otherwise. By way of example, "a processor" programmed to perform various functions refers to one processor programmed to perform each and every function, or more than one processor collectively programmed to perform each of the various functions.

Applications of diffusion models are vast and diversified. Since diffusion models can leverage large amounts of training datasets that are available and tend to be open-source, such models may be generalized for a variety of applications. However, until the development of the present disclosure, past implementations of diffusion models lacked the ability to associate minute defects within a larger image of a manufactured product with the fact that the smaller portion of the image was indeed the defective region of the manufactured product. The following few paragraphs detail the context of the previous implementations of diffusion models, followed by an explanation of how the present disclosure overcomes these limitations.

Although diffusion models that have been generically trained on available training datasets may already have other applications, they lack the ability to inspect and determine outputs of specified datasets. For example, within a manufacturing setting, a company may perform quality checks on products that have recently been manufactured but have not been shipped out of the facility yet for purchase or for further downstream manufacturing processes using a system such as an automated optical inspection system. While those quality inspections are vital to ensure that defective products are not inadvertently shipped out of the manufacturing facility and sold to customers, the company may not be interested in having images of their internal facilities be incorporated into an open-source training dataset for the types of machine learning models that could aid in optimizing such quality check procedures. Furthermore, if a quality check is being done during a midway point in an overall manufacturing process, it is of even further interest to the company to keep such images that are processed by an automated optical inspection system confidential.

Past implementations of such uses of machine learning models have attempted to apply diffusion models that have been trained using only images from the internet or other open-source areas to the application of analyzing manufactured products with tiny manufacturing defects as well as defects of various kinds that are not seen in images from such open-source training datasets inevitably fails. In particular, pate implementations of diffusion models are trained to associate text and images, and thus those simply generically trained modals fail to associate text such as "part with a defect" to the correct portion of the image that contains the defect because the model has not been trained for such specialized tasks.

Furthermore, previous methods for attempting to fine-tune Text-To-Image Diffusion Models, such as Stable Diffusion, lack any mechanism to produce cross-attention maps wherein the defects, especially those occupying very few pixels in comparison to the entire image, are the only non-zero pixels. Naive fine-tuning of Stable Diffusion-like Latent Diffusion Models leads to cross-attention maps wherein the defect-specific pixels are indistinguishable from the rest of image.

Moreover, naively fine-tuning a pre-trained Text-to-Image Diffusion Model simply using the original loss function provides insufficient information when fine-tuning Latent Diffusion Models on specialized images such as those of manufactured parts, wherein the defects are tiny in comparison to the full resolution of the image and are not found in publicly available data which such models were originally trained on.

The present disclosure overcomes these challenges by reshaping the fine-tuning process, thus allowing the model to be specifically trained to recognize images and portions of images pertaining to a company's specific manufactured products and to commonly seen defects or other manufacturing errors that are specific to those products. The present disclosure goes even further by also incorporating a novel loss parameter, also referred to herein as a loss term or loss function, when fine-tuning the model.

The present disclosure introduces an additional novel loss term, referred to herein as the average defect mask loss parameter, to force the cross-attention maps, at a specific resolution, corresponding to portions of the text input stating the kind of defect to resemble the defect in the original image. This is achieved by using deep segmentation networks to create segmentation mask images isolating the defects from the rest of the image and forcing the appropriate cross-attention maps to be equal to these binary mask images. Therefore, the present disclosure enables the synthesis of defects through Text-To-Image Diffusion Models in specialized and confidential manufacturing products.

In addition, and in total contrast to previous implementations of diffusion models, the present disclosure does not require detailed annotations, also referred to as text-based data samples herein, from human experts that may identify a defect on a product on a production line, wherein that human-based identification process is both time consuming and cost prohibitive since they describe every single defect type and variation. The present disclosure instead applies generic names or placeholder terms for the defects, such as "scratch," "stain," or "dent," and text-based data samples therefore rely on simple words or phrases such as "A metal surface with a scratch." The intricate details of the defect, such as its location, orientation, shape, and size, are instead captured by the cross-attention maps during execution of the model, and which are trained to mimic binary segmentation mask images obtained by applying deep segmentation methods to the original images, allowing the model to isolate the defects from the rest of the image.

The following description continues with a general introduction to machine learning techniques that are relevant to the methods for training and fine-tuning diffusion models, such as those described herein. Next, various embodiments of the architecture and process flow of fine-tuning a convolutional neural network within a Text-To-Image Diffusion Model are discussed. The present disclosure then demonstrates the versatility of the methods and systems described herein for incorporation into an automated optical inspection system within the context of a production line within a manufacturing facility.

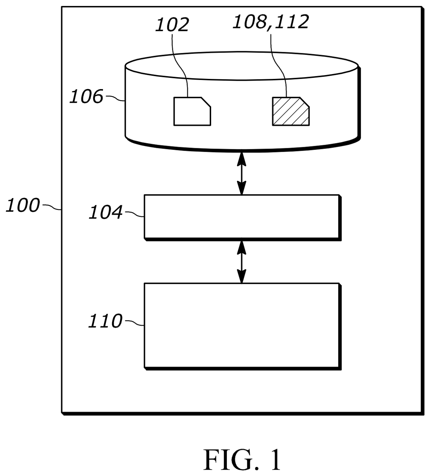

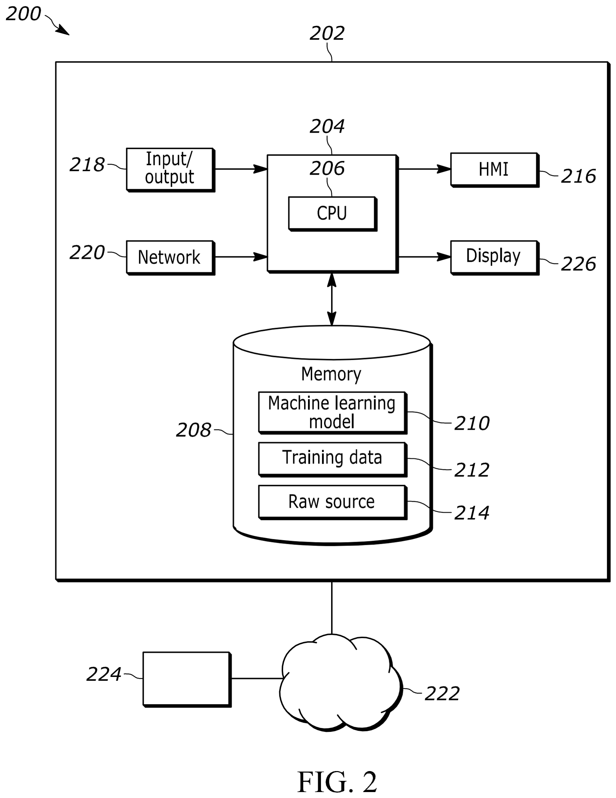

FIG. 1 illustrates a system 100 for training, fine-tuning, and utilizing a neural network, such as a convolutional neural network. It should be understood that, while the example embodiments given in the following paragraphs herein with regard to FIGS. 1 and 2 refer to a convolutional neural network, additional embodiments of FIGS. 1 and 2 may be applied to any other type of neural-network-based or non-neural-network-based machine learning model that is configured to be developed, trained, and fine-tuned for various defect detection applications that are further described herein.

Moreover, a Text-To-Image Diffusion Model, such as those described herein within the context of defect detection, may include at least a Large Language Model (LLM) text encoder, a variational autoencoder, and a convolutional neural network. The convolutional neural network may be configured to have a U-Net architecture.

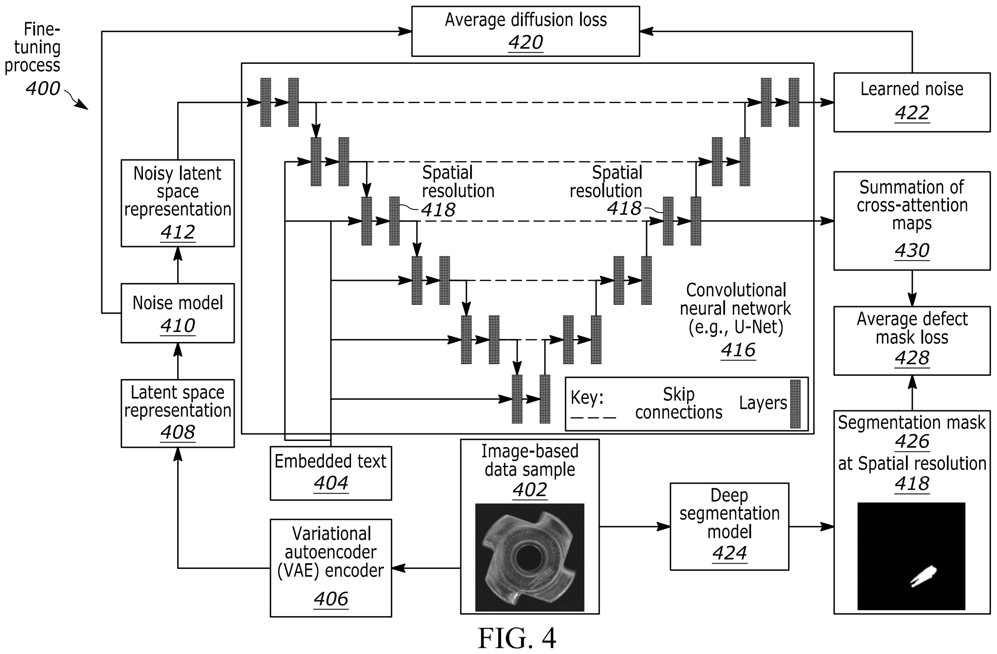

As such, and as related to the description herein, a "convolutional" neural network that is configured to have a U-Net architecture may be defined as having convolutional neural network blocks, self-attention blocks, cross-attention blocks, and ResNet blocks that are layered on top of one another and in between an input layer and an output layer of the model (see also the Key in FIG. 4 herein). Additional embodiments pertaining to such types of machine learning models are described herein with regard to machine learning model 210; fine-tuned convolutional neural network 316, convolutional neural network 416; fine-tuned, convolutional neural network 500; fine-tuned, convolutional neural network 600; fine-tuned, convolutional neural network 700; fine-tuned, convolutional neural network 800; and block 908.

In some embodiments, the system 100 may comprise an input interface for accessing fine-tuning dataset 102 for the convolutional neural network. For example, as illustrated in FIG. 1, the input interface may be constituted by a data storage interface 104 which may access the fine-tuning data 102 from a data storage 106. For example, the data storage interface 104 may be a memory interface or a persistent storage interface, e.g., a hard disk or an SSD interface, but also a personal, local or wide area network interface such as a Bluetooth, ZigBee or Wi-Fi interface or an Ethernet or fiber optic interface. The data storage 106 may be an internal data storage of the system 100, such as a hard drive or SSD, but also an external data storage, e.g., a network-accessible data storage.

In some embodiments, the data storage 106 may further comprise a data representation 108 of an untrained version of the model (e.g., a version of the machine learning model that has yet to be trained) which may be accessed by the system 100 from the data storage 106. It will be appreciated, however, that the fine-tuning data 102 and the data representation 108 of the pre-trained convolutional neural network may also each be accessed from a different data storage, e.g., via a different subsystem of the data storage interface 104. Each subsystem may be of a type as is described above for the data storage interface 104. In other embodiments, the data representation 108 of the pre-trained convolutional neural network may be internally generated by the system 100 on the basis of design parameters for the neural network, and therefore may not explicitly be stored on the data storage 106. The system 100 may further comprise a processor subsystem 110 which may be configured to, during operation of the system 100, provide an iterative function as a substitute for a stack of layers of the convolutional neural network to be fine-tuned. Here, respective layers of the stack of layers being substituted may have mutually shared weights and may receive, as input, an output of a previous layer, or for a first layer of the stack of layers, an initial activation, and a part of the input of the stack of layers. The processor subsystem 110 may be further configured to iteratively fine-tune the convolutional neural network using the fine-tuning data 102 (e.g., thus generating updated versions of the machine learning model with respect to a first "pre-trained" version of the model). Here, an iteration of the fine-tuning by the processor subsystem 110 may comprise a forward propagation part and a reverse propagation part. The reverse process may also be defined herein as a generation process.

The system 100 may further comprise an output interface for outputting a data representation 112 of the fine-tuned convolutional neural network, this data may also be referred to as both trained and fine-tuned model data 112. For example, as also illustrated in FIG. 1, the output interface may be constituted by the data storage interface 104, with said interface being in these embodiments an input/output ("IO") interface, via which the trained and fine-tuned model data 112 may be stored in the data storage 106. For example, the data representation 108 defining the 'pre-trained' convolutional neural network may during or after the fine-tuning be replaced, at least in part by the data representation 112 of the fine-tuned neural network, in that the parameters of the convolutional neural network, such as weights, hyperparameters, and other types of parameters of convolutional neural networks, may be adapted to reflect the fine-tuning on the fine-tuning data 102. This is also illustrated in FIG. 1 by the reference numerals 108 and 112 referring to the same data record on the data storage 106. In other embodiments, the data representation 112 may be stored separately from the data representation 108 defining the 'pre-trained' convolutional neural network. In some embodiments, the output interface may be separate from the data storage interface 104, but may in general be of a type as described above for the data storage interface 104.

FIG. 2 illustrates a computer-implemented method for training, fine-tuning, and utilizing a convolutional neural network, according to some embodiments. The system 200 may include at least one computing system 202. The computing system 202 may include at least one processor 204 that is operatively connected to a memory unit 208. The processor 204 may include one or more integrated circuits that implement the functionality of a central processing unit (CPU) 206 and, in some embodiments, a graphics processing unit (GPU). The CPU 206 may be a commercially available processing unit that implements an instruction set such as one of the x86, ARM, Power, or MIPS instruction set families. During operation, the CPU 206 may execute stored program instructions that are retrieved from the memory unit 208. The stored program instructions may include software that controls operation of the CPU 206 to perform the operation described herein. In some examples, the processor 204 may be a system on a chip (SoC) that integrates functionality of the CPU 206, the memory unit 208, a network interface, and input/output interfaces into a single integrated device. The computing system 202 may implement an operating system for managing various aspects of the operation.

The memory unit 208 may include volatile memory and non-volatile memory for storing instructions and data. The non-volatile memory may include solid-state memories, such as NAND flash memory, magnetic and optical storage media, or any other suitable data storage device that retains data when the computing system 202 is deactivated or loses electrical power. The volatile memory may include static and dynamic random-access memory (RAM) that stores program instructions and data. For example, the memory unit 208 may store a machine learning model 210 or algorithm, a training and/or fine-tuning dataset 212 for the machine learning model 210, raw source dataset 214, etc.

The computing system 202 may include a network interface device 220 that is configured to provide communication with external systems and devices. For example, the network interface device 220 may include a wired and/or wireless Ethernet interface as defined by Institute of Electrical and Electronics Engineers (IEEE) 902.11 family of standards. The network interface device 220 may include a cellular communication interface for communicating with a cellular network (e.g., 3G, 4G, 5G). The network interface device 220 may be further configured to provide a communication interface to an external network 222 or cloud.

The external network 222 may be referred to as the world-wide web or the Internet. The external network 222 may establish a standard communication protocol between computing devices. The external network 222 may allow information and data to be easily exchanged between computing devices and networks. One or more servers 224 may be in communication with the external network 222.

The computing system 202 may include an input/output (I/O) interface 218 that may be configured to provide digital and/or analog inputs and outputs. The I/O interface 218 may include additional serial interfaces for communicating with external devices (e.g., Universal Serial Bus (USB) interface).

The computing system 202 may include a human-machine interface (HMI) device 216 that may include any device that enables the system 200 to receive control input. Examples of input devices may include human interface inputs such as keyboards, mice, touchscreens, voice input devices, and other similar devices. The computing system 202 may include a display device 226. The computing system 202 may include hardware and software for outputting graphics and text information to the display device 226. The display device 226 may include an electronic display screen, projector, printer or other suitable device for displaying information to a user or operator. The computing system 202 may be further configured to allow interaction with remote HMI and remote display devices via the network interface device 220.

The system 200 may be implemented using one or multiple computing systems. While the example depicts a single computing system 202 that implements all of the described features, it is intended that various features and functions may be separated and implemented by multiple computing units in communication with one another. The particular system architecture selected may depend on a variety of factors.

The system 200 may implement a machine learning algorithm 210 that is configured to analyze the raw source dataset 214. The raw source dataset 214 may include raw or unprocessed sensor data that may be representative of an input dataset for a machine learning system. In some examples, the machine learning algorithm 210 may be a convolutional neural network algorithm that is designed to perform a predetermined function. For example, the neural network algorithm may be configured within a context of learning to detect defects of manufactured products that are present within image-based data samples.

The computer system 200 may store a training and/or fine-tuning dataset 212 for the machine learning algorithm 210. The training dataset 212 may represent a set of previously constructed data for training the machine learning algorithm 210. The training dataset 212 may be used by the machine learning algorithm 210 to learn weighting factors associated with a convolutional neural network algorithm. The training dataset 212 may include a set of source data that has corresponding outcomes or results that the machine learning algorithm 210 tries to duplicate via the learning process.

The machine learning algorithm 210 may be operated in a learning mode using the training dataset 212 as input. The machine learning algorithm 210 may be executed over a number of iterations using the data from the training dataset 212. With each iteration, the machine learning algorithm 210 may update internal weighting factors based on the achieved results. For example, the machine learning algorithm 210 can compare output results (e.g., annotations) with those included in the training dataset 212. Since the training dataset 212 includes the expected results, the machine learning algorithm 210 can determine when performance is acceptable. After the machine learning algorithm 210 achieves a predetermined performance level (e.g., 100% agreement with the outcomes associated with the training dataset 212), the machine learning algorithm 210 may be executed using data that is not in the training dataset 212. The trained machine learning algorithm 210 may be applied to new datasets to generate annotated data.

The machine learning algorithm 210 may be configured to identify a particular feature in the raw source data 214. The raw source data 214 may include a plurality of instances or input dataset for which annotation results are desired. The machine learning algorithm 210 may be programmed to process the raw source data 214 to identify the presence of the particular features. The machine learning algorithm 210 may be configured to identify a feature in the raw source data 214 as a predetermined feature. The raw source data 214 may be derived from a variety of sources. For example, the raw source data 214 may be actual input data collected by a machine learning system. The raw source data 214 may be machine generated for testing the system. As an example, the raw source data 214 may include image-based data samples and text-based data samples of manufactured products with defects.

In the example, the machine learning algorithm 210 may then process raw source data 214 and output an indication of where within the images the defects are present. A machine learning algorithm 210 may generate a confidence level or factor for each output generated. For example, a confidence value that exceeds a predetermined high-confidence threshold may indicate that the machine learning algorithm 210 is confident that the identified feature corresponds to the particular feature. A confidence value that is less than a low-confidence threshold may indicate that the machine learning algorithm 210 has some uncertainty that the particular feature is present.

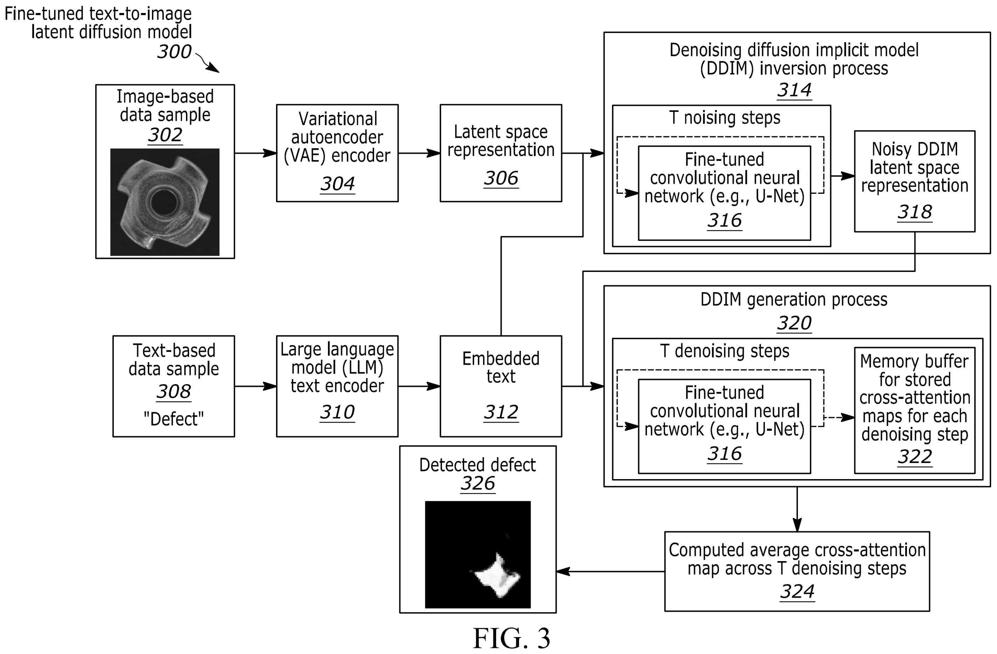

FIG. 3 illustrates the architecture of a Text-To-Image Diffusion Model that is configured to receive an image-based data sample of a manufactured product and a text-based data sample indicating that there is a defect on the manufactured product, and subsequently detect a portion of the image that corresponds to the defect, according to some embodiments.

As shown in FIG. 3, a Text-To-Image Latent Diffusion Model 300 may include three main components that are configured to interact with one another. A first component is LLM text encoder 310, which receives text-based data sample 308 as an input, and, when executed, proceeds to convert the text-based data sample 308 into an embedding, as indicated by embedded text 312. In some embodiments, the LLM text encoder 310 may resemble a Contrastive Language-Image Pre-training (CLIP) encoder.

A second component is variational autoencoder (VAE), in which the VAE encoder 304 receives image-based data sample 302 and generates a latent space representation 306 of the image. The third component is a convolutional neural network 316, which received a noisy latent space representation 306, along with embedded text 312, to perform first a Denoising Diffusion Implicit Model (DDIM) inversion process 314. The fine-tuned convolutional neural network 316 outputs a noisy DDIM latent space representation 318, which is then provided back to the fine-tuned convolutional neural network 316 during performance of a DDIM generation process 320. During the DDIM generation process, cross-attention maps for each denoising step are stored into a memory buffer 322, and are then used to compute an average cross-attention map across $T$ denoising steps 324. This is then used to generate an output image-based data sample that defines the location of the defect within the originally received image-based data sample 302. As illustrated in FIG. 3, detected defect 326 correctly locates the defect of image-based data sample 302 as being located in the bottom right-hand side of the image.

In particular embodiments illustrated in FIG. 3, Text-To-Image Latent Diffusion Model 300 falls within the latent diffusion model class, as convolutional neural network 316 is configured to work within a latent space.

In other embodiments, however, a Text-To-Image Diffusion Model may remain within the image space during the entirety of the process illustrated in FIG. 3. In such embodiments, image-based data sample 302 is provided directly to fine-tuned convolutional neural network 316 without passing through the VAE encoder 304.

Embodiments illustrated in the following FIG. 4 continue to describe convolutional neural network 316 as being implemented within a latent diffusion model version of Text-To-Image Latent Diffusion Model 300. However, it should be understood that a similar fine-tuning process 400 of convolutional neural network 316 may be performed for embodiments in which convolutional neural network 316 is implemented such that the Text-To-Image Diffusion Model remains in the image space, rather than converting into the latent space.

FIG. 4 illustrates a process for fine-tuning a convolutional neural network (e.g., the U-Net architecture of the Stable Diffusion Model) within the Text-To-Image Diffusion Model introduced in FIG. 3, according to some embodiments.

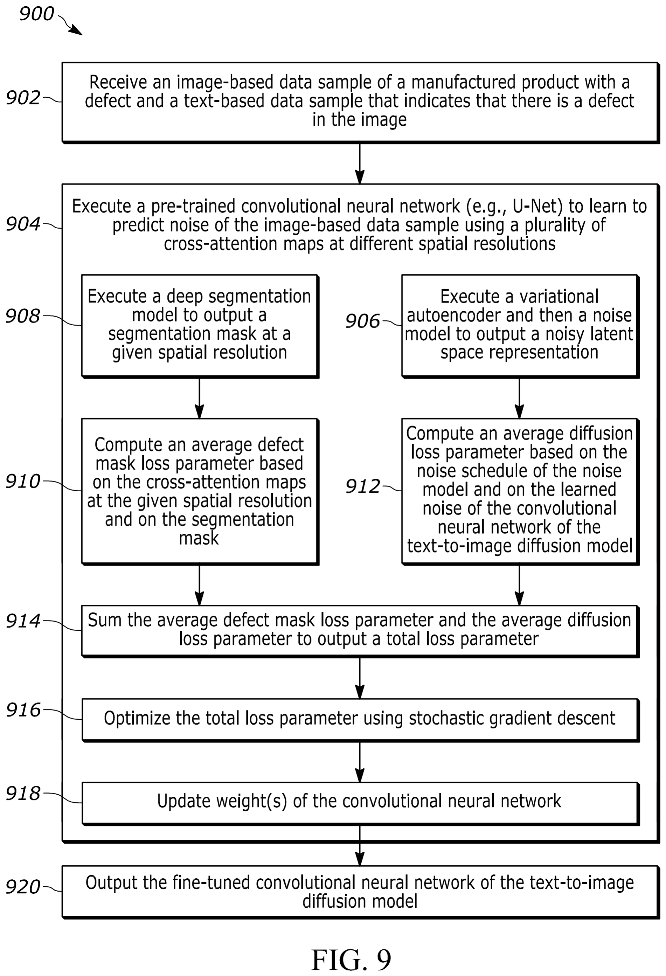

At a moment in time depicted by FIG. 4, it should be understood that convolutional neural network 416 refers to a pre-trained model that is now undergoing fine-tuning via the methods described herein. The model is referred to as a "pre-trained" model because the model has already undergone one or more rounds of training using various training datasets, and thus is at a point at which it may be used for generalized tasks. The moment in time depicted in FIG. 4 thus refers to "fine-tuning" the pre-trained convolutional neural network 416 of Text-To-Image Latent Diffusion Model 300 in order to enable the learning of detecting defects within images of manufactured products. The "pre-trained" Text-To-Image Diffusion Model has yet to be trained for such a specialized task, and therefore the architecture shown in FIG. 4 and the corresponding processes described herein and in FIG. 9 pertain to fine-tuning the model such that it may then be executed for such types of specialized tasks (e.g., detecting a portion of an image that contains a defect, scratch, mark, or other quality issue).

The following paragraphs describe the four process flows that collectively define fine-tuning process 400 and that are configured to operate using the U-Net architecture shown in FIG. 4. The paragraphs are formatted in a way as to discuss sequential steps that are taken in order to execute a pre-trained, convolutional neural network 416 of Text-To-Image Latent Diffusion Model 300 for fine-tuning such that the model learns to detect portion(s) of an image that refer to a defect of a manufactured product. The first process flow refers to blocks 402, 406, 408, 410, and 412 of FIG. 4. The second process flow refers to blocks 416, 404, 412, and 422 of FIG. 4. The third process flow refers to blocks 410, 420, and 422 of FIG. 4. The fourth process flow refers to blocks 402, 424, 418, 428, and 430 of FIG. 4.

Referring now to the first process flow, inputs to the convolutional neural network 416 of the Text-To-Image Latent Diffusion Model include both a noisy latent space representation 412 and embedded text 404. As introduced in FIG. 3, image-based data sample 402 is provided to VAE encoder 406 in order to compress the image into latent space representation 408. Latent space representation 408 is then provided to noise model 410 to output a noisy latent space representation 412, prior to providing said sample to the convolutional neural network 416. As also introduced in FIG. 3, a text-based data sample is provided to an LLM text encoder, such as the CLIP encoder, to output embedded text 404.

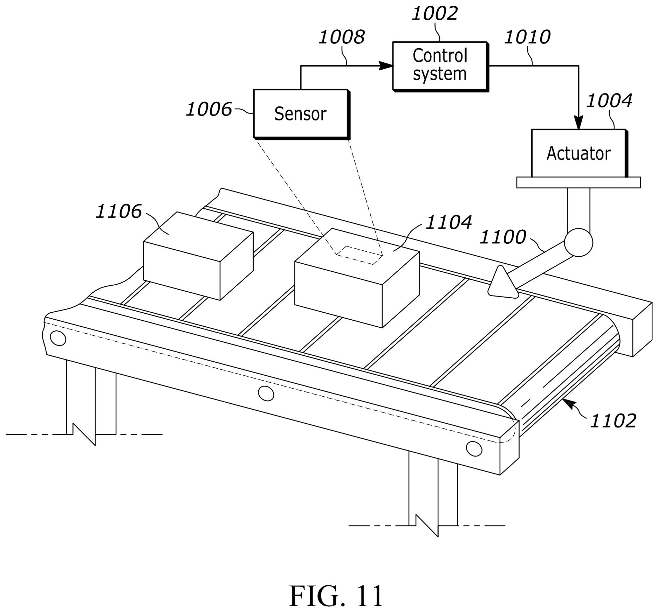

As shown in the figure, image-based data sample 402 resembles a manufactured product (e.g., a nut) with a defect (e.g., a scratch) on the surface of the bottom right-hand side of the image. As the present disclosure pertains to detecting defects within a manufacturing setting, the image-based data sample may resemble an image of a product that was captured while the product was still within a manufacturing facility and that has completed the manufacturing process, but has not yet left the production facility (e.g., to be sold or transported elsewhere). In some embodiments, the captured image may correspond to a moment in time at which a quality check of manufactured products is being made in an assembly line setting. An example of such an implementation is further illustrated in FIG. 11 herein.

The particular image-based data sample shown in FIG. 4 is a manufactured product that resembles a nut. However, it should be understood that images of other manufactured products are also meant to be encompassed in the discussion herein. In some embodiments, the image may resemble a bolt or a screw, or some other mechanical product component. In such embodiments, the image may include a scratch, dent, defect, or other physical quality issue with a portion of the overall manufactured product. In other embodiments, the image may resemble a portion of a larger manufactured product. For example, the image may capture a hood of a car that is being manufactured within a car manufacturing facility, and the image may further include a portion of the hood of the car that has a dent or scratch.

The text-based data sample, as also shown in FIG. 3, includes some short word, phrase, or sentence that provides a description for image-based data sample 402. For example, the text-based data sample 308 that corresponds to image-based data sample 402 could contain the word "defect," the phrase "nut with scratch," or a sentence "The image is manufactured product X with a mark on the right." It should be understood that any other short word or phrase that provides initial information to the convolutional neural network 416, indicating that image-based data sample 402 contains a manufacturing defect, could equally be used as text-based data sample 304, including words and phrases such as "scratch," "dent," "defect," "discoloration," "warping," "bent," "quality check failure," etc.

Returning now to the four process flows that collectively define fine-tuning process 400, the first process flow is illustrated using blocks 402, 406, 408, 410, and 412, and refers to a preparation of a noisy latent space representation 412 that is then used as an input to the convolutional neural network 416. In order to fine-tune convolutional neural network 416 to learn to detect defects within image-based data samples, initial latent space representation 408 is provided to a noise model 410, which, when executed, adds stochastic noise to the latent space representation of image-based data sample 402 to output noisy latent space representation 412. In some embodiments, the noise model is configured to have a pre-determined noise schedule that gradually lowers a signal-to-noise ratio of the original image-based data sample 402. As additionally described below, the added noise is then used during the execution of the convolutional neural network 416 in order to learn to predict the noise (see also learned noise 422, additionally described below).

The second process flow of the four process flows refers to blocks 416, 404, 412, and 422 of FIG. 4, and refers more specifically to an execution of the convolutional neural network 416. In some embodiments, the noisy latent space representation 412 and the embedded text 404 are provided to convolutional neural network 416, as indicated by the arrows in FIG. 4, and then the model is then executed to predict noise within noisy latent space representation 412 using a plurality of cross-attention maps at different spatial resolutions within the U-Net architecture of convolutional neural network 416. Cross-attention maps may be defined herein as the output or activation of a cross-attention block within the U-Net architecture of the convolutional neural network 416 of the larger Text-To-Image Latent Diffusion Model.

In some embodiments, the execution of convolutional neural network 416 includes a forward process and a reverse process. During the forward process, Gaussian noise is gradually added to the noisy latent space representation to destroy any structure in the image-based data sample and eventually convert the information within the original image-based data sample into Gaussian noise. During the reverse process, the convolutional neural network is trained to gradually remove the noise that has been added to the image-based data sample in the forward process, as indicated via learned noise 422 in FIG. 4. With respect to both the forward and the reverse processes, "gradually" refers to the processes as being auto-regressive and including a large number of steps and/or iterations. Once a given training and/or fine-tuning execution of convolutional neural network 416 is complete, the model is thus able to generate image-based data samples, such as detected defect 326, using the reverse process.

In some embodiments, Text-To-Image Latent Diffusion Model 300 leverages an LLM 310 that has been trained on vast amounts of publicly available internet text data in order to "guide" the generation process of the convolutional neural network 416 of Text-To-Image Latent Diffusion Model 300. The "guidance" of the model may in part be configured by modifying the reverse process of the model, in which the reverse process is perturbed at each step by small amounts to influence the overall evolution and thus output of the reverse process. The modification may be computed using conditional guidance, classifier guidance, or classifier-free guidance. For example, a Text-To-Image Latent Diffusion Model 300 may be configured such that conditional guidance is used, and thus the reverse, or generation, process is "conditioned" on the text-based data sample 308 (e.g., the word "defect").

Furthermore, and again by leveraging Large Language Models, a pre-trained Large Language Model is executed to convert the text-based data sample into a list of tokens, which are then further processed into embedding vectors as one vector for each token. The embedding vectors are then incorporated into the diffusion generation process using cross-attention layers, as shown in FIG. 4. The cross-attention layers use an attention mechanism to ensure that the different portions of the noisy latent space representation 412 are correctly influenced by the most relevant parts of the embedded text 404. In some embodiments, the U-Net architecture may be used to configure this connection between the cross-attention layers and the respective inputs to Text-To-Image Latent Diffusion Model 300.

Moreover, the U-Net architecture may additionally be mathematically represented by (i) $\epsilon_t^\theta = DM(t, x_t, y)$, wherein *DM* refers to a Text-to-Image Diffusion Model, or (ii) $\epsilon_t^\theta = LDM(t, z_t, y)$, wherein *LDM* refers to a Text-to-Image Latent Diffusion Model. In both cases, y may be defined as the embedded text input that is provided to the model and $\theta$ are the trainable weights of the model. The model is used at every step t of the reverse process to predict the amount of noise present in the current iterate of the generation process, e.g., wherein $\epsilon_t^\theta$ is the predicted amount of noise in $x_t$ or $z_t$ at step *t*. The conditional text guidance may therefore be written as y, wherein y is the same for respective steps t of the generation process. The reverse process may include a number of steps t corresponding to 1000 - 4000 in order to generate high quality data, according to some embodiments. In order to prevent the reverse, or generation, process from becoming computationally expensive or slow, the following modifications may be further made to the architecture of convolutional neural network 416 of Text-To-Image Latent Diffusion Model 300.

In some embodiments, "samplers" may be applied for diffusion models, wherein such a configuration causes the reverse process to become faster while not significantly compromising the quality of generated data. For example, a DDIM sampler modifies the forward process such that it is non-Markovian, thus enabling for a modified reverse process with significantly few steps. In some embodiments, the DDIM sampler may be written as

$$x_{t-1} = \sqrt{\alpha_{t-1}} \left( \frac{x_t - \sqrt{1 - \alpha_t}\, \epsilon_t^\theta(t, x_t, y)}{\sqrt{\alpha_t}} \right) + \sqrt{1 - \alpha_{t-1}}\epsilon_t^\theta(t, x_t, y),$$

wherein $\theta$ collectively represents the weights of the entire diffusion model, including the U-Net implementation of convolutional neural network 416 and the Large Language Model 310.

In other embodiments of a Text-To-Image Latent Diffusion Model, the DDIM sampler may be written as

$$z_{t-1} = \sqrt{\alpha_{t-1}} \left( \frac{z_t - \sqrt{1 - \alpha_t}\, \epsilon_t^\theta(t, z_t, y))}{\sqrt{\alpha_t}} \right) + \sqrt{1 - \alpha_{t-1}}\epsilon_t^\theta(t, z_t, y).$$

When either of the above equations is applied, the reverse, or generation, process of the DDIM sampler is deterministic and does not involve addition of noise at each step t. This allows one to use DDIM to encode data into a DDIM latent code or into a DDIM latent noise vector.

Note that the DDIM latent code represents the noised VAE latent $z_t$ *for t = T* in case of Latent Diffusion Models, while it is $x_T$ in case of Diffusion Models after iteratively applying the equation given below. This DDIM latent code can then be used as a starting point of a reverse, or generation, process to regenerate the original data using the above equation iteratively. In some embodiments, this protocol may be referred to as DDIM Inversion. Mathematically, the encoding is also an iterative forward process to convert data into a DDIM latent code. This is achieved by applying the following equation over a fixed number of steps, *T:*

$$x_{t+1} = \sqrt{\alpha_{t+1}} \left( \frac{x_t - \sqrt{1 - \alpha_t}\epsilon_t^\theta(t, x_t, y)}{\sqrt{\alpha_t}} \right) + \sqrt{1 - \alpha_{t+1}}\epsilon_t^\theta(t, x_t, y).$$

In some embodiments that apply a Text-To-Image Latent Diffusion Model, the following equation may be iteratively applied over a fixed number of steps, T:

$$z_{t+1} = \sqrt{\alpha_{t+1}} \left( \frac{z_t - \sqrt{1 - \alpha_t}\, \epsilon_t^\theta(t, z_t, y)}{\sqrt{\alpha_t}} \right) + \sqrt{1 - \alpha_{t+1}}\, \epsilon_t^\theta(t, z_t, y).$$

Returning now to the four process flows that are illustrated in FIG. 4, the third and fourth process flows pertain to the computation of an average diffusion loss parameter 420 and an average defect mask loss parameter 428, which are then used to update weights of the convolutional neural network 416 of Text-To-Image Latent Diffusion Model 300.

The third process flow of the overall fine-tuning process 400 refers to blocks 410, 420, and 422. As shown in FIG. 4, the amount of noise that is applied during the execution of noise model 410 may be compared to the learned noise 422 that is learned during the fine-tuning execution of convolutional neural network 416 in order to compute an average diffusion loss parameter 420 of the model. Additional description pertaining to such a computation is provided with regard to block 912 of FIG. 9 below.

The fourth process flow of the overall fine-tuning process 400 refers to blocks 402, 424, 426, 428, and 430 of FIG. 4. In order to compute an average defect mask loss parameter 428, a segmentation mask 426 that corresponds to image-based data sample 402 is first generated. In some embodiments, the image-based data sample 402 is provided to a deep segmentation model 424, and the deep segmentation model 424 is then executed to output a segmentation mask 426. For example, the deep segmentation model 424 may resemble the Segment Anything Model (SAM).

In some embodiments, segmentation mask 426 may resemble a binary image in which a subset of the pixels of image-based data sample 402 that correspond specifically to the defect of the manufactured product have a pixel magnitude of 255, while other pixels of the binary image have a pixel magnitude of zero. As illustrated in FIG. 4, the defect in the bottom right-hand portion of segmentation mask 426 has a pixel magnitude of 255 while the rest of the image has a pixel magnitude of zero.

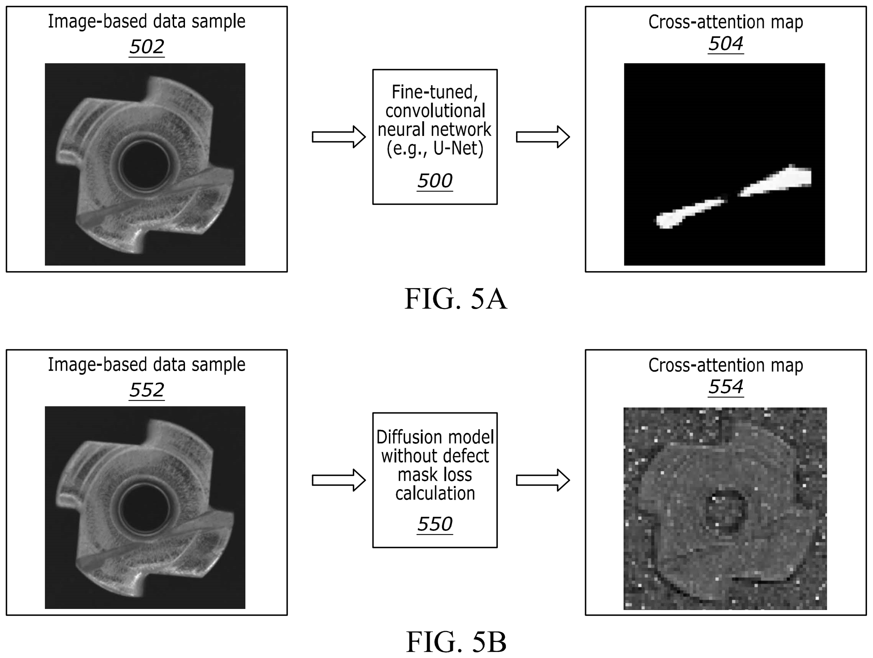

Continuing with description of the fourth process flow of the overall fine-tuning process 400, a summation of cross-attention maps 430 at a given spatial resolution 418 is also used to compute the average defect mask loss parameter 428. In some embodiments, and prior to the execution of fine-tuning process 400, a user may determine which spatial resolution of the six spatial resolutions shown in FIG. 4 is to be used when computing the average defect mask loss parameter 428. Such an indication of which particular spatial resolution is to be used may then be provided to the computing devices that are used to execute the Text-To-Image Latent Diffusion Model 300 and compute said parameter 428, as cross-attention maps 430 and segmentation mask 426 refer to the same spatial resolution 418 in order to make such a computation of the average defect mask loss parameter 428. The selected spatial resolution may typically be one-eighth or one-sixteenth of the spatial resolution of the original image-based data sample 402. In particular embodiments shown in the figure, spatial resolution 418 refers to a 64x64 resolution. Additional examples of cross-attention maps at this particular spatial resolution are also provided in FIGS. 5A, 6A, 7A, and 8A - 8C herein.

As shown in FIG. 4, the summation of cross-attention maps 430 at a given spatial resolution 418 and the segmentation mask 426 at spatial resolution 418 of the image-based data sample 402 are then used to compute the average defect mask loss parameter 428. Additional description pertaining to such a computation is provided with regard to block 910 of FIG. 9 below.

Following the computation of both the average diffusion loss parameter 420 and the average defect mask loss parameter 428, a fifth process flow of fine-tuning process 400 may also be understood from FIG. 4 in which the parameters are both used to update weights of the convolutional neural network 416 of Text-To-Image Latent Diffusion Model 300. In order to update weights of the model, the average diffusion loss parameter 420 and the average defect mask loss parameter 428 are summed together to determine a total loss parameter of the convolutional neural network 416 of Text-To-Image Latent Diffusion Model 300. The total loss parameter is then optimized using any variant of stochastic gradient descent, such as by applying the Adam optimizer. The optimized total loss parameter is then used when updating one or more of the weights of the convolutional neural network 416 of Text-To-Image Latent Diffusion Model 300.

After one or more of the weights have been updated, the fine-tuned convolutional neural network 416 of Text-To-Image Latent Diffusion Model 300 may be provided for use in detecting whether defects in other image-based data samples of other manufactured products are present in the images or not. This is further illustrated in FIGS. 5A, 6A, 7A, and 8A - 8C.

FIGS. 5A - 5B are meant to be used to compare the use of the methods and systems described herein (e.g., FIGS. 5A, 6A, and 7A) to the use of some other past implementation of a diffusion model (e.g., FIGS. 5B, 6B, and 7B) in order to illustrate the success of the present disclosure in correctly identifying the portion of the image that refers to a defect and the total failure of past implementations of diffusion models in identifying such information. Moreover, FIGS. 5A - 7B continue to illustrate image-based data samples that include manufactured products that resemble nuts. However, it should be understood that, once Text-To-Image Latent Diffusion Model 300 has been fine-tuned to determine defects within images of manufactured products, other examples of image-based data samples could be equally used in FIGS. 5A - 7B, such as images of bolts, screws, etc.

FIG. 5A illustrates a first example of an image of a manufactured product with a defect and a positive recognition by a Text-To-Image Diffusion Model of the portion of the image that shows the defect, according to some embodiments. In contrast, FIG. 5B illustrates the same image introduced in FIG. 5A, and a failure of some other diffusion model to recognize the portion of the image that shows the defect.

In some embodiments, FIG. 5A refers to a moment in time after which point Text-To-Image Latent Diffusion Model 300 has been both generally trained and then specifically fine-tuned for detecting defects within images of manufactured products. This may also be referred to as a moment in time during which the Text-To-Image Latent Diffusion Model 300 is operating in inference mode.

As shown in the figure, fine-tuned, convolutional neural network 500 of a larger Text-To-Image Diffusion Model, such as Text-To-Image Latent Diffusion Model 300, is provided with image-based data sample 502 and a corresponding text-based data sample that includes a short word or phrase such as "defect." Image-based data sample 502 includes a defect along the bottom half of the image of the manufactured part, which the model then correctly identifies in cross-attention map 504, which corresponds to an output of fine-tuned, convolutional neural network 500 at a spatial resolution of 64x64.

As introduced above with regard to segmentation mask 426, cross-attention map 504 may similarly resemble a binary image in which a subset of the pixels of image-based data sample 502 that correspond specifically to the defect of the manufactured product have a pixel magnitude of 255, while other pixels of the binary image have a pixel magnitude of zero. As illustrated in the figure, the defect in the bottom half of cross-attention map 504 has a pixel magnitude of 255 while the rest of the image has a pixel magnitude of zero.

By computing both an average diffusion loss parameter 420 and an average defect mask loss parameter 428 during the previous fine-tuning stage of the convolutional neural network, and by using both results to update weights of the model, the resulting fine-tuned, convolutional neural network 500 is then configured to correctly identify the defect within image-based data sample 502 during the execution of the model that is illustrated in FIG. 5A.

In total contrast, FIG. 5B illustrates that when some other previous implementation of a diffusion model 550 that does not incorporate the computation of the defect mask loss parameter into an updating of weights is applied, the model fails completely to identify the defect portion of image-based data sample 552. This is illustrated using cross-attention map 554, in which the diffusion model 550 fails to identify even any portion of the image the refers to a "defect," and instead incorrectly indicates that either all of the image or none of the image corresponds to a "defect" portion of the manufactured product.

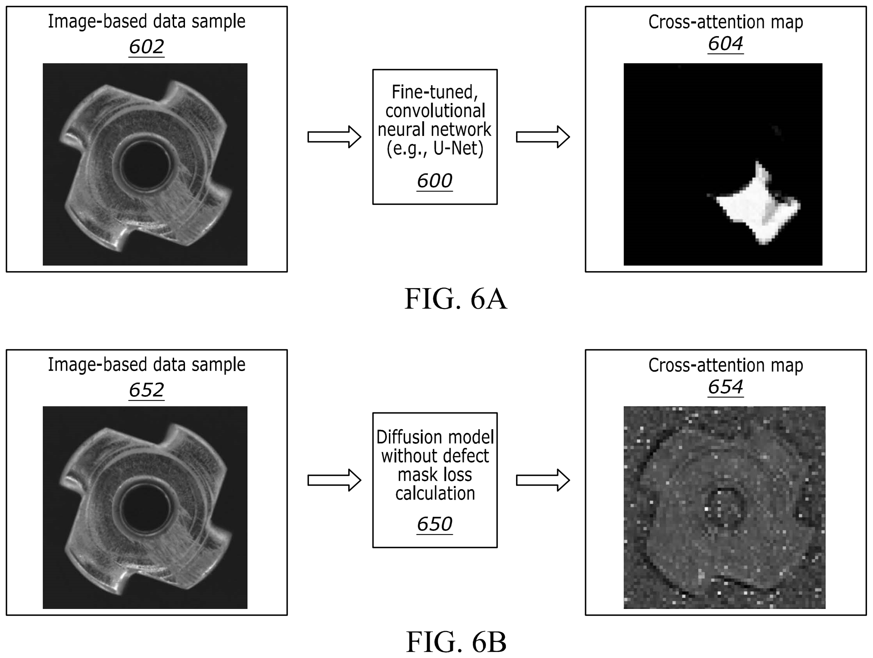

FIG. 6A illustrates a second example of an image of a manufactured product with a defect and a positive recognition by a Text-To-Image Diffusion Model of the portion of the image that shows the defect, according to some embodiments. In contrast, FIG. 6B illustrates the same image introduced in FIG. 6A, and a failure of some other diffusion model to recognize the portion of the image that shows the defect.

Similarly to that which is shown in FIG. 5A, FIG. 6A refers to a moment in time after which point Text-To-Image Latent Diffusion Model 300 has been both generally trained and then specifically fine-tuned for detecting defects within images of manufactured products. This may also be referred to as a moment in time during which the Text-To-Image Latent Diffusion Model 300 is operating in inference mode.

As shown in the figure, fine-tuned, convolutional neural network 600 of a larger Text-To-Image Diffusion Model, such as Text-To-Image Latent Diffusion Model 300, is provided with image-based data sample 602 and a corresponding text-based data sample that includes a short word or phrase such as "defect." Image-based data sample 602 includes a defect along the bottom right-hand side of the image of the manufactured part, which the model then correctly identifies in cross-attention map 604, which corresponds to an output of fine-tuned, convolutional neural network 600 at a spatial resolution of 64x64.

As introduced above with regard to segmentation mask 426, cross-attention map 604 may similarly resemble a binary image in which a subset of the pixels of image-based data sample 602 that correspond specifically to the defect of the manufactured product have a pixel magnitude of 255, while other pixels of the binary image have a pixel magnitude of zero. As illustrated in the figure, the defect in the bottom right-hand side of cross-attention map 604 has a pixel magnitude of 255 while the rest of the image has a pixel magnitude of zero.

By computing both an average diffusion loss parameter 420 and an average defect mask loss parameter 428 during the previous fine-tuning stage of the convolutional neural network, and by using both results to update weights of the model, the resulting fine-tuned, convolutional neural network 600 is then configured to correctly identify the defect within image-based data sample 602 during the execution of the model that is illustrated in FIG. 6A.

In total contrast, FIG. 6B illustrates that when some other previous implementation of a diffusion model 650 that does not incorporate the computation of the defect mask loss parameter into an updating of weights is applied, the model fails completely to identify the defect portion of image-based data sample 652. This is illustrated using cross-attention map 654, in which the diffusion model 650 fails to identify even any portion of the image the refers to a "defect," and instead incorrectly indicates that either all of the image or none of the image corresponds to a "defect" portion of the manufactured product.

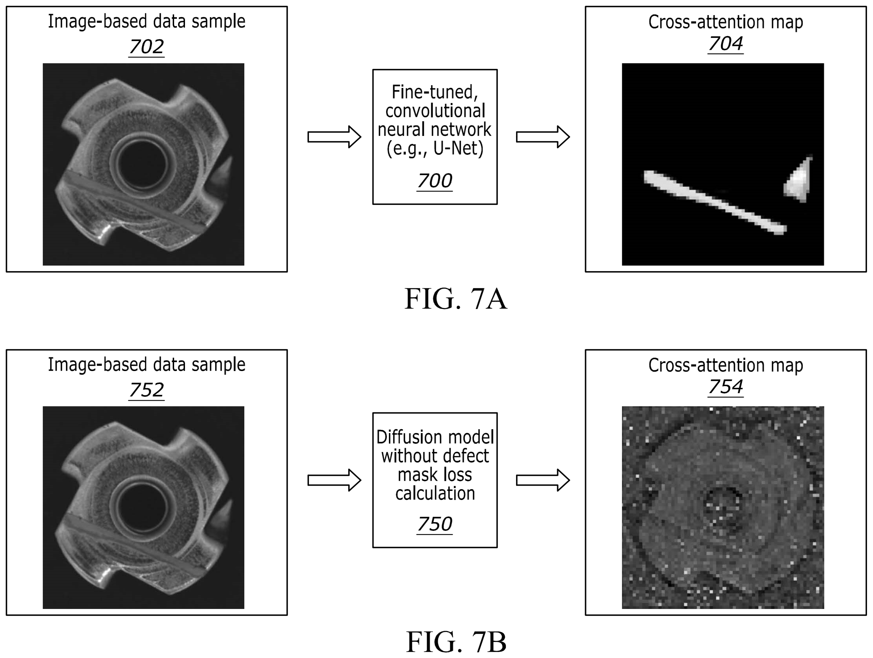

FIG. 7A illustrates a third example of an image of a manufactured product with a defect and a positive recognition by a Text-To-Image Diffusion Model of the portion of the image that shows the defect, according to some embodiments. In contrast, FIG. 7B illustrates the same image introduced in FIG. 7A, and a failure of some other diffusion model to recognize the portion of the image that shows the defect.

Similarly to that which is shown in FIGS. 5A and 6A, FIG. 7A refers to a moment in time after which point Text-To-Image Latent Diffusion Model 300 has been both generally trained and then specifically fine-tuned for detecting defects within images of manufactured products. This may also be referred to as a moment in time during which the Text-To-Image Latent Diffusion Model 300 is operating in inference mode.

As shown in the figure, fine-tuned, convolutional neural network 700 of a larger Text-To-Image Diffusion Model, such as Text-To-Image Latent Diffusion Model 300, is provided with image-based data sample 702 and a corresponding text-based data sample that includes a short word or phrase such as "defect." Image-based data sample 702 includes a defect along the bottom half of the image of the manufactured part, which the model then correctly identifies in cross-attention map 704, which corresponds to an output of fine-tuned, convolutional neural network 700 at a spatial resolution of 64x64.

As introduced above with regard to segmentation mask 426, cross-attention map 704 may similarly resemble a binary image in which a subset of the pixels of image-based data sample 702 that correspond specifically to the defect of the manufactured product have a pixel magnitude of 255, while other pixels of the binary image have a pixel magnitude of zero. As illustrated in the figure, the defect in the bottom half of cross-attention map 704 has a pixel magnitude of 255 while the rest of the image has a pixel magnitude of zero.

By computing both an average diffusion loss parameter 420 and an average defect mask loss parameter 428 during the previous fine-tuning stage of the convolutional neural network, and by using both results to update weights of the model, the resulting fine-tuned, convolutional neural network 700 is then configured to correctly identify the defect within image-based data sample 702 during the execution of the model that is illustrated in FIG. 7A.

In total contrast, FIG. 7B illustrates that when some other previous implementation of a diffusion model 750 that does not incorporate the computation of the defect mask loss parameter into an updating of weights is applied, the model fails completely to identify the defect portion of image-based data sample 752. This is illustrated using cross-attention map 754, in which the diffusion model 750 fails to identify even any portion of the image the refers to a "defect," and instead incorrectly indicates that either all of the image or none of the image corresponds to a "defect" portion of the manufactured product.

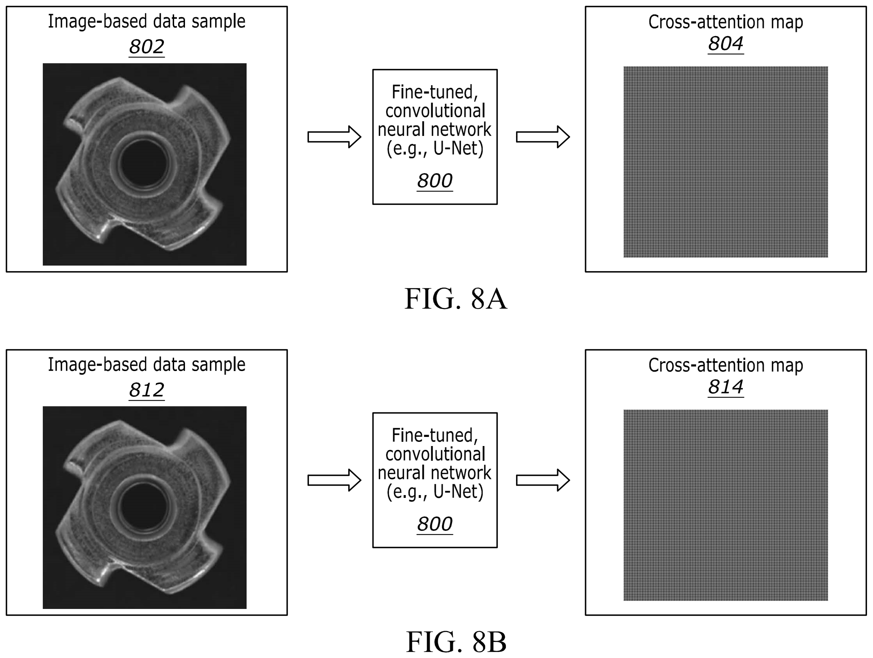

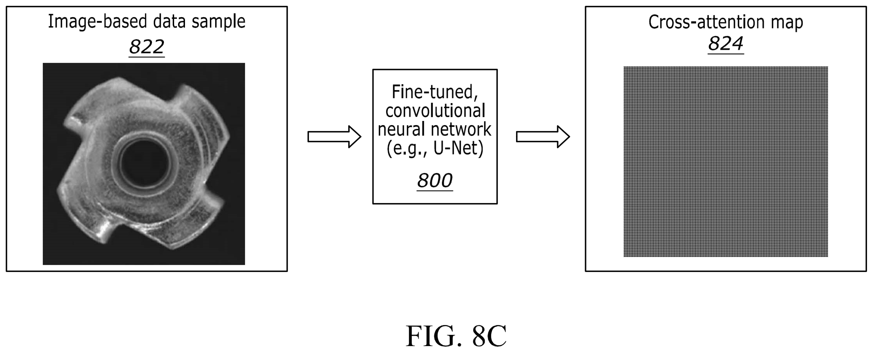

FIGS. 8A, 8B, and 8C illustrate three examples of images of manufactured product without a defect and a positive recognition by a fine-tuned convolutional neural network of a Text-To-Image Diffusion Model that there is no defect present within the image, according to some embodiments.

Similarly to that which is shown in FIGS. 5A, 6A, and 7A, FIGS. 8A, 8B, and 8C refer to a moment in time after which point Text-To-Image Latent Diffusion Model 300 has been both generally trained and then specifically fine-tuned for detecting defects within images of manufactured products. This may also be referred to as a moment in time during which the Text-To-Image Latent Diffusion Model 300 is operating in inference mode.

As shown in FIG. 8A, fine-tuned, convolutional neural network 800 of a larger Text-To-Image Diffusion Model, such as Text-To-Image Latent Diffusion Model 300, is provided with image-based data sample 802 and a corresponding text-based data sample that includes a short word or phrase such as "defect." Image-based data sample 802 includes no portion of image with a defect, which the model then correctly identifies in cross-attention map 804, which corresponds to an output of fine-tuned, convolutional neural network 800 at a spatial resolution of 64x64. As illustrated in the figure, the entirety of cross-attention map 804 has a pixel magnitude of zero, thus confirming that there is no defect present in the image-based data sample 802.

As shown in FIG. 8B, fine-tuned, convolutional neural network 800 of a larger Text-To-Image Diffusion Model, such as Text-To-Image Latent Diffusion Model 300, is provided with image-based data sample 812 and a corresponding text-based data sample that includes a short word or phrase such as "defect." Image-based data sample 812 includes no portion of the image with a defect, which the model then correctly identifies in cross-attention map 814, which corresponds to an output of fine-tuned, convolutional neural network 800 at a spatial resolution of 64x64. As illustrated in the figure, the entirety of cross-attention map 814 has a pixel magnitude of zero, thus confirming that there is no defect present in the image-based data sample 812.

As shown in FIG. 8C, fine-tuned, convolutional neural network 800 of a larger Text-To-Image Diffusion Model, such as Text-To-Image Latent Diffusion Model 300, is provided with image-based data sample 822 and a corresponding text-based data sample that includes a short word or phrase such as "defect." Image-based data sample 822 includes no portion of the image with a defect, which the model then correctly identifies in cross-attention map 824, which corresponds to an output of fine-tuned, convolutional neural network 800 at a spatial resolution of 64x64. As illustrated in the figure, the entirety of cross-attention map 824 has a pixel magnitude of zero, thus confirming that there is no defect present in the image-based data sample 822.

By computing both an average diffusion loss parameter 420 and an average defect mask loss parameter 428 during the previous fine-tuning stage of the convolutional neural network, and by using both results to update weights of the model, the resulting fine-tuned, convolutional neural network 800 is then configured to correctly identify that image-based data samples 802, 812, and 822 are clean of defects during the executions of the model that are illustrated in FIGS. 7A, 7B, and 7C.

FIG. 9 is a flow diagram that illustrates a process of fine-tuning a convolutional neural network of a Text-To-Image Diffusion Model to detect a portion of an image that captures a manufactured product that corresponds to a defect within the product, according to some embodiments.

The following description of process 900 refers to pre-processing steps (e.g., block 902) prior to an execution of the convolutional neural network of the Text-To-Image Latent Diffusion Model for fine-tuning, to the execution of the convolutional neural network of the Text-To-Image Diffusion Model (e.g., blocks 904, 906, 908, 910, 912, 914, 916, and 918), and to post-processing steps after the convolutional neural network of the Text-To-Image Diffusion Model is fine-tuned (e.g., block 920). Thus, for ease of discussion herein, blocks within FIGS. 3A and 3B may also be referenced in order to provide additional system-based context for the method steps described in the following paragraphs.

In block 902, both an image-based data sample and a text-based data sample are received to the computing devices that are to be executing the convolutional neural network of the Text-To-Image Diffusion model for fine-tuning. The image-based data sample includes a captured image of a manufactured product that has been already identified as somehow "defective," and the text-based data sample identifies that the manufactured product is defective using a short word or phrase, such as "defect," "scratch," "stain," or "dent." In some embodiments, the image-based data samples and the corresponding text-based data samples may be received as a dataset, and may also be referred to as a labeled dataset, since the text-based data samples may serve as ground truths that the images do indeed contain defects somewhere within the respective images. As stated in the previous paragraph, and for ease of discussion in the following paragraphs, an example of an image-based data sample and the corresponding text-based data sample may refer to image-based data sample 402 and text-based data sample 308.

Blocks 904, 906, 908, 910, 912, 914, 916, and 918 then refer to various steps within the overall fine-tuning process 400, introduced above with regard to FIG. 4. Block 904 refers to the fine-tuning process 400 in sum, in which a pre-trained but not yet fine-tuned convolutional neural network (e.g., U-Net architecture of the Stable Diffusion Model) is executed in order to learn to predict noise of image-based data samples using a plurality of cross-attention maps at several spatial resolutions.

In block 908, a deep segmentation model, such as SAM, is provided with the image-based data samples of the dataset and is then executed in order to output corresponding segmentation masks which indicate the portions of the images that include defects using a pixel magnitude of 255 and the portions of the images that do not include the defects using a pixel magnitude of zero. In some embodiments, segmentation masks may additionally be referred to as defect masks. Moreover, the deep segmentation model is configured to output corresponding segmentation masks at a same spatial resolution as the spatial resolution that will be later used to compute the average defect mass loss parameter in block 910.

In block 906, a VAE autoencoder is used to output a latent space representation of the original image-based data sample, and then a noise model is executed in order to output a noisy latent space representation, such as noisy latent space representation 412 in FIG. 4.

The noisy latent space representations and their corresponding embedded texts, embedded using an LLM text encoder, are then provided to the convolutional neural network of the Text-To-Image Latent Diffusion Model, which is then executed. In order to learn to predict noise of the image-based data samples, iterative steps involving a plurality of cross-attention maps at different spatial resolutions are computed. In some embodiments, this may also be explained using the following process flow.

The fine-tuning of the convolutional neural network of the Text-To-Image Latent Diffusion Model is performed for $N$ iterations, wherein, for each of the iterations $n = 0$ to $N$, the following process steps are completed: A mini-batch of images $x_{0,i}$ and corresponding segmentation masks $m_i$ are sampled. Then, the weights of the U-Net-based architecture $\epsilon_t^{\theta_0}$ are initialized with those of a pre-trained convolutional neural network (e.g., U-Net) of the Text-To-Image Diffusion Model or Text-To-Image Latent Diffusion Model, such as Stable Diffusion. Next, as many noise vectors as the size of the mini-batch $\gamma_i \sim \mathcal{N}(0, I)$ are sampled, wherein i is the sample index within the mini-batch, and subsequently as many values of time steps as the size of the mini-batch $t_i \sim \mathcal{U}[0, T]$ are sampled. Then, noise $\gamma_i$ is added to each image-based data sample using

$$x_{t_i} = \sqrt{\alpha_{t_i}}\, x_{0,i} + \sqrt{1 - \alpha_{t_i}}\, \gamma_i \text{, or using } z_{t_i} = \sqrt{\alpha_{t_i}}\, z_{0,i} + \sqrt{1 - \alpha_{t_i}}\, \gamma_i \text{ in case of a Text-to-Image Latent}$$

Diffusion Model, wherein $\alpha_t$ is a pre-determined noise schedule that gradually lowers the signal-to-noise ratio in the forward process of the convolutional neural network.

During the execution of the forward pass of the convolutional neural network, various cross-attention maps at various spatial resolutions may be saved to a buffer for future use in computing parameters of the model, such as that which is described in blocks 910 and/or 912.

In block 910, an average defect mask loss parameter, $\mathcal{L}_{defect\_mask}$, is computed. As previously illustrated using spatial resolution 418 in FIG. 4, a given spatial resolution of the plurality of spatial resolutions is selected to be used to compute the average defect mask loss parameter. For example, the selected spatial resolution may be one-eighth or one-sixteenth of the original spatial resolution of the image-based data samples introduced in block 902. The parameter is computed by averaging respective ones of the cross-attention maps at the selected spatial resolution (e.g., spatial resolution 418 in FIG. 4), wherein the average cross-attention map may then be denoted as $\hat{m}_i$. The average defect mass loss parameter may then be computed as follows: $\mathcal{L}_{defect\_mask} = \mathbb{E}_{x_0,t,z}[\|m - \hat{m}\|]$ .

In block 912, an average diffusion loss parameter, $\mathcal{L}_{diff}$ , is computed. In some embodiments, the average diffusion loss parameter may be computed as follows, in which the expectation is computed by averaging over the index i which is not included in the following equation for brevity: $\mathcal{L}_{diff} = \mathbb{E}_{x_0,t,\gamma}[\|\gamma - \epsilon_{\theta_n}(x_t)\|]$ .

In block 914, the average diffusion loss parameter, $\mathcal{L}_{diff}$ , and the average defect mask loss parameter, $\mathcal{L}_{defect\_mask}$ , are summed in order to compute a total loss parameter of the model: $\mathcal{L}_{total} = \mathcal{L}_{diff} + \mathcal{L}_{defect\_mask}$ .

In block 916, the total loss parameter, $\mathcal{L}_{total}$ , is then optimized using any variant of stochastic gradient descent, such as the Adam optimizer.

In block 918, one or more of the weights, $\theta_n$, of the convolutional neural network of the Text-To-Image Latent Diffusion Model are updated, resulting in a both pre-trained and fine-tuned version of the overall Text-To-Image Latent Diffusion Model. In some embodiments, this may also be written as $\theta_{n+1} \leftarrow Adam(\theta_n, \nabla \mathcal{L}_{total})$

Once fine-tuned, the Text-To-Image Latent Diffusion Model may then be used to detect defects in other image-based data samples of manufactured products, as illustrated in block 920. For example, the model may be implemented into an Automated Optical Inspection (AOI) system, wherein the system captures images of products that have just been manufactured and are now being inspected for quality control purposes. The fine-tuned Text-To-Image Diffusion Model is then executed to determine whether or not the images of the manufactured products that are being checked for quality have defects, scratches, dents, etc., or whether they do not contain such defects and pass a quality control inspection. This is further illustrated in FIG. 11 herein.

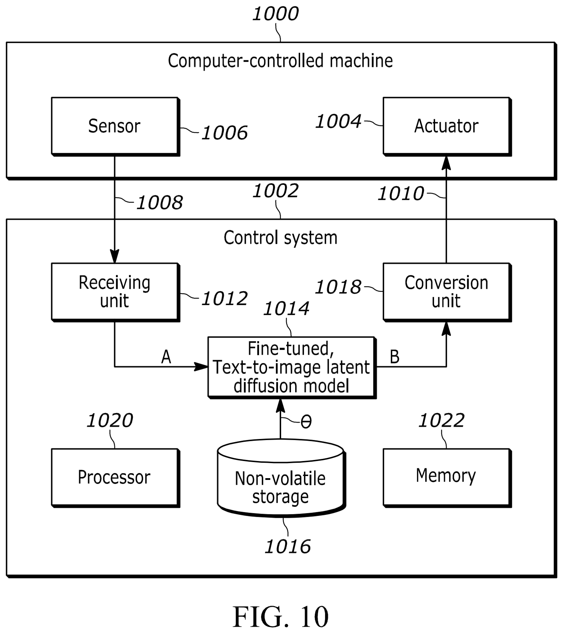

The methods and systems disclosed herein can be used in many different applications. Determining production and/or manufacturing errors within manufactured products before the products leave a manufacturing facility to be sold can be better optimized using Text-To-Image Latent Diffusion Models, such as those described herein. The implementation of such a context is illustrated in FIGS. 10 and 11.

FIG. 10 depicts a schematic diagram of an interaction between a computer-controlled machine 1000 and a control system 1002. Computer-controlled machine 1000 includes actuator 1004 and sensor 1006. Actuator 1004 may include one or more actuators and sensor 1006 may include one or more sensors. Sensor 1006 is configured to sense a condition of computer-controlled machine 1000. Sensor 1006 may be configured to sense ID and/or OOD data, and the corresponding processors can be configured to determine whether the data is ID or OOD according to the teachings herein. Sensor 1006 may be configured to encode the sensed condition into sensor signals 1008 and to transmit sensor signals 1008 to control system 1002. Non-limiting examples of sensor 1006 include a camera, video sensor, optical sensor, and the like. In one embodiment, sensor 1006 is an optical sensor configured to sense optical images of an environment proximate to computer-controlled machine 1000.

Control system 1002 is configured to receive sensor signals 1008 from computer-controlled machine 1000. As set forth below, control system 1002 may be further configured to compute actuator control commands 1010 depending on the sensor signals and to transmit actuator control commands 1010 to actuator 1004 of computer-controlled machine 1000.

As shown in FIG. 10, control system 1002 includes receiving unit 1012. Receiving unit 1012 may be configured to receive sensor signals 1008 from sensor 1006 and to transform sensor signals 1008 into input signals $a$. In an alternative embodiment, sensor signals 1008 are received directly as input signals $a$ without receiving unit 1012. Each input signal $a$ may be a portion of each sensor signal 1008. Receiving unit 1012 may be configured to process each sensor signal 1008 to product each input signal $a$. Input signal $a$ may include data corresponding to an image recorded by sensor 1006. For example, image-based data samples and text-based data samples may be received to receiving unit 1012.

Control system 1002 includes a fine-tuned, Text-To-Image Latent Diffusion Model 1014. Fine-tuned, Text-To-Image Latent Diffusion Model 1014 may be configured to determine whether or not incoming images of manufactured products from sensor 1006 include defects. Fine-tuned, Text-To-Image Latent Diffusion Model 1014 is configured to be parametrized by parameters, such as those described above (e.g., parameter $\theta$). Parameters $\theta$ may be stored in and provided by non-volatile storage 1016. Fine-tuned, Text-To-Image Latent Diffusion Model 1014 is configured to determine output signals $b$ from input signals $a$. Each output signal b includes information that assigns one or more labels to each input signal $a$. Fine-tuned, Text-To-Image Latent Diffusion Model 1014 may transmit output signals b to conversion unit 1018. Conversion unit 1018 is configured to covert output signals b into actuator control commands 1010. Control system 1002 is configured to transmit actuator control commands 1010 to actuator 1004, which is configured to actuate computer-controlled machine 1000 in response to actuator control commands 1010. In another embodiment, actuator 1004 is configured to actuate computer-controlled machine 1000 based directly on output signals b.

Upon receipt of actuator control commands 1010 by actuator 1004, actuator 1004 is configured to execute an action corresponding to the related actuator control command 1010. Actuator 1004 may include a control logic configured to transform actuator control commands 1010 into a second actuator control command, which is utilized to control actuator 1004. In one or more embodiments, actuator control commands 1010 may be utilized to control a display instead of or in addition to an actuator.

In another embodiment, control system 1002 includes sensor 1006 instead of or in addition to computer-controlled machine 1000 including sensor 1006. Control system 1002 may also include actuator 1004 instead of or in addition to computer-controlled machine 1000 including actuator 1004.

As shown in FIG. 10, control system 1002 also includes processor 1020 and memory 1022. Processor 1020 may include one or more processors. Memory 1022 may include one or more memory devices. The fine-tuned, Text-To-Image Latent Diffusion Model 1014 of one or more embodiments may be implemented by control system 1002, which includes non-volatile storage 1016, processor 1020 and memory 1022.

Non-volatile storage 1016 may include one or more persistent data storage devices such as a hard drive, optical drive, tape drive, non-volatile solid-state device, cloud storage or any other device capable of persistently storing information. Processor 1020 may include one or more devices selected from high-performance computing (HPC) systems including high-performance cores, microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on computer-executable instructions residing in memory 1022. Memory 1022 may include a single memory device or a number of memory devices including, but not limited to, random access memory (RAM), volatile memory, non-volatile memory, static random access memory (SRAM), dynamic random access memory (DRAM), flash memory, cache memory, or any other device capable of storing information. Moreover, processor 1020 and memory 1022 may be configured to provide collected data to one or more other computing devices that are configured to execute the fine-tuned, Text-To-Image Latent Diffusion Model 1014 within domain-specific embodiments that are also shown in FIG. 11. Such collected data may be used to generate training datasets and validation datasets for various stages in preparing and executing a machine learning model into industry-grade applications. Within a context described herein with regard to fine-tuning a Text-To-Image Latent Diffusion Model 1014, processor 1020 and memory 1022 may be coupled to or otherwise remotely connected to computing devices that may then conduct fine-tuning processes such as those described above.

Processor 1020 may be configured to read into memory 1022 and execute computer-executable instructions residing in non-volatile storage 1016 and embodying one or more machine learning algorithms and/or methodologies of one or more embodiments. Non-volatile storage 1016 may include one or more operating systems and applications. Non-volatile storage 1016 may store compiled and/or interpreted from computer programs created using a variety of programming languages and/or technologies, including, without limitation, and either alone or in combination, Java, C, C++, C#, Objective C, Fortran, Pascal, Java Script, Python, Perl, and PL/SQL.

Upon execution by processor 1020, the computer-executable instructions of non-volatile storage 1016 may cause control system 1002 to implement one or more of the machine learning algorithms and/or methodologies as disclosed herein. Non-volatile storage 1016 may also include machine learning data (including data parameters) supporting the functions, features, and processes of the one or more embodiments described herein.

The program code embodying the algorithms and/or methodologies described herein is capable of being individually or collectively distributed as a program product in a variety of different forms. The program code may be distributed using a computer readable storage medium having computer readable program instructions thereon for causing a processor to carry out aspects of one or more embodiments. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts or diagrams. In certain alternative embodiments, the functions, acts, and/or operations specified in the flowcharts and diagrams may be re-ordered, processed serially, and/or processed concurrently consistent with one or more embodiments. Moreover, any of the flowcharts and/or diagrams may include more or fewer nodes or blocks than those illustrated consistent with one or more embodiments.

The processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

FIG. 11 depicts a schematic diagram of control system 1002 configured to control system 1100 (e.g., an automated optical inspection system) of manufacturing system 1102 (e.g., a production line). Control system 1002 may be configured to control actuator 1004, which is configured to control system 1100.

Sensor 1006 of system 1100 (e.g., manufacturing machine) may be an optical sensor configured to capture one or more properties of manufactured product 1104. Fine-tuned Text-To-Image Latent Diffusion Model 1014 may be configured to determine a state of manufactured product 1104 from one or more of the captured properties. Actuator 1004 may be configured to control system 1100 (e.g., manufacturing machine) depending on the determined state of manufactured product 1104 for a subsequent quality control step. The actuator 1004 may be configured to control functions of system 1100 (e.g., manufacturing machine) on subsequent manufactured product 1106 of system 1100 (e.g., manufacturing machine) depending on the determined state of manufactured product 1104. For example, control system 1002 determines that there is a defect on or within manufactured product 1104, then said system may instruct actuator 1004 to control system 1100 such that manufactured product 1104 is removed from the production line 1102 for further inspection. In another example, system 1100 may be used to halt movement of the production line 1102 while awaiting further inspection of manufactured product 1104. In such examples, inspection of manufactured product 1106 may be paused until the state of manufactured product 1104 is determined.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

**Claims**

1. A computer-implemented method for fine-tuning a Text-To-Image Latent Diffusion Model, comprising:

receiving an image-based data sample and an embedded text sample, wherein:

image-based data sample is an image of a manufactured product with a defect; and
the embedded text sample is an embedding of a text-based data sample that indicates the defect;

executing a variational autoencoder to output a latent space representation of the image-based data sample;
executing a noise model to output a noisy version of the latent space representation;
providing the noisy version of the latent space representation and the embedded text sample to a convolutional neural network of the Text-To-Image Latent Diffusion Model;
executing the convolutional neural network to learn to predict noise of the image-based data sample using a plurality of cross-attention maps at different spatial resolutions;
computing an average defect mask loss parameter based on cross-attention maps of a given one of the different spatial resolutions and on a segmentation mask corresponding to the image-based data sample;
updating one or more weights of the convolutional neural network based, at least in part, on the average defect mask loss parameter; and
outputting a fine-tuned Text-To-Image Latent Diffusion Model with the updated one or more weights for use in detecting defects in other image-based data samples of other manufactured products.

2. The computer-implemented method of claim 1, further comprising:

summing together the average defect mask loss parameter and an average diffusion loss parameter to determine a total loss parameter;
optimizing the total loss parameter using stochastic gradient descent; and
updating the one or more weights of the convolutional neural network additionally based on the optimized total loss parameter.

3. The computer-implemented method of claim 2, further comprising:

computing the average diffusion loss parameter based on the noise model and on the learned noise of the convolutional neural network; and
providing the average diffusion loss parameter to determine the total loss parameter.

4. The computer-implemented method of claim 2, wherein the stochastic gradient descent is Adam optimizer.

5. The computer-implemented method of claim 1, further comprising:

providing the image-based data sample to a deep segmentation model; and
executing the deep segmentation model to output the segmentation mask for the computing the average defect mask loss parameter.

6. The computer-implemented method of claim 5, wherein:

the segmentation mask is a binary image;
a subset of pixels of the binary image, that correspond to the defect of the manufactured product, have a pixel magnitude of 255; and
other pixels of the binary image have a pixel magnitude of zero.

7. The computer-implemented method of claim 1, wherein the noise model is configured to have a pre-determined noise schedule that gradually lowers a signal-to-noise ratio of the latent space representation of the image-based data sample.

8. The computer-implemented method of claim 1, further comprising:

determining the given one of the different spatial resolutions to be used in the computing the average defect mask loss parameter, wherein the given spatial resolution is one-eighth or one-sixteenth of a spatial resolution of the image-based data sample; and
providing an indication of the determined spatial resolution to the convolutional neural network prior to the executing.

9. The computer-implemented method of claim 1, wherein the Text-To-Image Latent Diffusion Model is a Stable Diffusion Model.

10. The computer-implemented method of claim 1, wherein the convolutional neural network is configured to have a U-Net architecture.

11. The computer-implemented method of claim 1, wherein the image-based data sample is an image of a bolt, a screw, or a nut.

12. A computer-implemented method for fine-tuning a Text-To-Image Diffusion Model, comprising:

receiving an image-based data sample and an embedded text sample, wherein:

image-based data sample is an image of a manufactured product with a defect; and
the embedded text sample is an embedding of a text-based data sample that indicates the defect;

executing a deep segmentation model to output a segmentation mask that corresponds to the image-based data sample;
providing a noisy version of the image-based data sample and the embedded text sample to a convolutional neural network of the Text-To-Image Diffusion Model;
executing the convolutional neural network to learn to predict noise of the image-based data sample using a plurality of cross-attention maps at different spatial resolutions;
computing an average defect mask loss parameter based on cross-attention maps of a given one of the different spatial resolutions and on the segmentation mask corresponding to the image-based data sample;
updating one or more weights of the convolutional neural network based, at least in part, on the average defect mask loss parameter; and
outputting a fine-tuned Text-To-Image Diffusion Model with the updated one or more weights for use in detecting defects in other image-based data samples of other manufactured products.

13. The computer-implemented method of claim 12, wherein:

the segmentation mask is a binary image;
a subset of pixels of the binary image, that correspond to the defect of the manufactured product, have a pixel magnitude of 255; and
other pixels of the binary image have a pixel magnitude of zero.

14. The computer-implemented method of claim 12, further comprising executing a noise model to output the noisy version of the image-based data sample, wherein the noise model is configured to have a pre-determined noise schedule that gradually lowers a signal-to-noise ratio of the image-based data sample.

15. The computer-implemented method of claim 12, further comprising:

summing together the average defect mask loss parameter and an average diffusion loss parameter to determine a total loss parameter;
optimizing the total loss parameter using stochastic gradient descent; and
updating the one or more weights of the convolutional neural network additionally based on the optimized total loss parameter.

16. The computer-implemented method of claim 15, further comprising:

computing the average diffusion loss parameter based, at least in part, on the learned noise of the convolutional neural network; and
providing the average diffusion loss parameter to determine the total loss parameter.

17. A non-transitory, computer-readable medium storing program instructions that, when executed on or across one or more processors, cause the one or more processors to:

receive an embedded text sample, an image-based data sample, and a segmentation mask corresponding to the image-based data sample, wherein:

the image-based data sample is an image of a manufactured product with a defect; and
the embedded text sample is an embedding of a text-based data sample that indicates the defect;

generate a noisy version of the image-based data sample;
execute, with the embedded text sample and the noisy version of the image-based data sample, a convolutional neural network of a Text-To-Image Diffusion Model to learn to predict noise of the image-based data sample using a plurality of cross-attention maps at different spatial resolutions;
compute an average defect mask loss parameter based on cross-attention maps of a given one of the different spatial resolutions and on the segmentation mask;
update one or more weights of the convolutional neural network based, at least in part, on the average defect mask loss parameter; and

output a fine-tuned Text-To-Image Diffusion Model with the updated one or more weights for use in detecting defects in other image-based data samples of other manufactured products.

18. The non-transitory, computer-readable medium of claim 17, wherein, to generate the noisy version of the image-based data sample, the program instructions cause the one or more processors to execute a noise model that gradually lowers a signal-to-noise ratio of the image-based data sample.

19. The non-transitory, computer-readable medium of claim 18, wherein the program instructions further cause the one or more processors to:

sum together the average defect mask loss parameter and an average diffusion loss parameter to determine a total loss parameter;
optimize the total loss parameter using stochastic gradient descent; and
update the one or more weights of the convolutional neural network additionally based on the optimized total loss parameter.

20. The non-transitory, computer-readable medium of claim 19, wherein the program instructions cause the one or more processors to

compute the average diffusion loss parameter based on the noise model and on the learned noise of the convolutional neural network; and
provide the average diffusion loss parameter to determine the total loss parameter.

FIG. 1

FIG. 2

FIG. 3

FIG. 4

FIG. 5A

FIG. 5B

Image-based data sample
*602*

Fine-tuned, convolutional neural network (e.g., U-Net)
*600*

Cross-attention map
*604*

## FIG. 6A

Image-based data sample
*652*

Diffusion model without defect mask loss calculation
*650*

Cross-attention map
*654*

## FIG. 6B

Image-based data sample
*702*

Fine-tuned, convolutional neural network (e.g., U-Net)
*700*

Cross-attention map
*704*

FIG. 7A

Image-based data sample
*752*

Diffusion model without defect mask loss calculation
*750*

Cross-attention map
*754*

FIG. 7B

FIG. 8A

FIG. 8B

EP 4 756 738 A1

FIG. 8C

*900*

**902** Receive an image-based data sample of a manufactured product with a defect and a text-based data sample that indicates that there is a defect in the image

**904** Execute a pre-trained convolutional neural network (e.g., U-Net) to learn to predict noise of the image-based data sample using a plurality of cross-attention maps at different spatial resolutions

**908** Execute a deep segmentation model to output a segmentation mask at a given spatial resolution

**906** Execute a variational autoencoder and then a noise model to output a noisy latent space representation

**910** Compute an average defect mask loss parameter based on the cross-attention maps at the given spatial resolution and on the segmentation mask

**912** Compute an average diffusion loss parameter based on the noise schedule of the noise model and on the learned noise of the convolutional neural network of the text-to-image diffusion model

**914** Sum the average defect mask loss parameter and the average diffusion loss parameter to output a total loss parameter

**916** Optimize the total loss parameter using stochastic gradient descent

**918** Update weight(s) of the convolutional neural network

**920** Output the fine-tuned convolutional neural network of the text-to-image diffusion model

FIG. 9

*1000*

Computer-controlled machine

Sensor ~*1006*

*1004*~ Actuator

~*1008*

*1002*~

Control system

Receiving unit ~*1012*

*1014*

*1018*~ Conversion unit

A → Fine-tuned, Text-to-image latent diffusion model → B

*1020*

Processor

~θ

Non-volatile storage

*1022*

Memory

*1016*

FIG. 10

FIG. 11

Europäisches
Patentamt
European
Patent Office
Office européen
des brevets

**EUROPEAN SEARCH REPORT**

Application Number

EP 25 21 7279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHENYU YAN ET AL: "AnomalySD: Few-Shot Multi-Class Anomaly Detection with Stable Diffusion Model", ARXIV.ORG CORNELL UNIVERSITY LIBRARY, 201 OLIN LIBRARY CORNELL UNIVERSITY ITHACA, NY 14853, 4 August 2024 (2024-08-04), XP091843707, | 1-5, 7-12, 14-20 | INV. G06V10/82 G06V20/60 |
| A | * Abstract, sections 3. Preliminaries, 4. The Proposed Method and 5. Experiment; figures 2-4 * | 6,13 | |
| A | JIAQI LIU ET AL: "Deep Industrial Image Anomaly Detection: A Survey", ARXIV.ORG CORNELL UNIVERSITY LIBRARY, 201 OLIN LIBRARY CORNELL UNIVERSITY ITHACA, NY 14853, 30 May 2023 (2023-05-30), XP091522515, * section 4. Industrial Manufacturing Setting * | 1-20 | |

TECHNICAL FIELDS
SEARCHED        (IPC)

G06V

The present search report has been drawn up for all claims

| Place of search | Date of completion of the search | Examiner |
|---|---|---|
| The Hague | 21 April 2026 | Markaki, Vasiliki |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)